(19) Europäisches Patentamt
European Patent Office
Office européen des brevets

(11) **EP 4 641 968 A1**

(12) **DEMANDE DE BREVET EUROPEEN**

(43) Date de publication:
**29.10.2025 Bulletin 2025/44**

(21) Numéro de dépôt: **25169944.3**

(22) Date de dépôt: **11.04.2025**

(51) Classification Internationale des Brevets (IPC):
***H04L 9/00*** (2022.01)    ***H04L 9/32*** (2006.01)

(52) Classification Coopérative des Brevets (CPC):
**H04L 9/3231; H04L 9/008;** H04L 2209/043;
H04L 2209/046

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **18.04.2024 FR 2404052**

(71) Demandeur: **Idemia Public Security France 92400 Courbevoie (FR)**

(72) Inventeur: **CHABANNE, Hervé 92400 Courbevoie (FR)**

(74) Mandataire: **IPS 2, place Samuel de Champlain 92400 Courbevoie (FR)**

(54) **COMPARAISON DE DONNÉES BIOMÉTRIQUES DANS LE DOMAINE CHIFFRÉ**

(57)     Procédé comprenant des étapes de : calcul d'un chiffré d'un score masqué représentant le résultat de l'application d'un masque primaire r à un score de distance entre une donnée biométrique d'épreuve ($x$) et une donnée biométrique de référence ($y_u$) ; et pour tout i allant de 1 à d, mise en œuvre des étapes suivantes par un dispositif de déchiffrement (3) d'indice i : déchiffrement du chiffré du score masqué à l'aide d'une clé de déchiffrement secondaire ($\langle sk \rangle_i$) d'indice i, le déchiffrement produisant une donnée ($\hat{s}$) représentant le score masqué modulo $2^n$, et génération d'un résultat partiel ($o_i$) d'indice i à partir de la donnée ($\hat{s}$) et d'une donnée de démasquage ($k_i$) d'indice i.

[Fig. 3]

**Description**

**DOMAINE DE L'INVENTION**

La présente divulgation concerne la comparaison de données biométriques dans le domaine chiffré, notamment pour le contrôle d'identité.

**ETAT DE LA TECHNIQUE**

Un procédé conventionnel pour vérifier si un individu est enrôlé dans une base de données comprend les étapes suivantes. Il est acquis une donnée biométrique d'épreuve se rapportant à l'individu à contrôler. Ensuite, il est calculé un score représentatif d'une distance entre la donnée biométrique d'épreuve et une donnée biométrique de référence contenue dans la base de données. Ce score est ensuite comparé avec un seuil. Un résultat de contrôle indiquant si la donnée biométrique d'épreuve correspond ou non à la donnée biométrique de référence est obtenu à l'issue de cette comparaison.

Ibarrondo, Alberto, et al. "Colmade: Collaborative masking in auditable decryption for bfv-based homomorphic encryption." Proceedings of the 2022 ACM Workshop on Information Hiding and Multimedia Security, 2022, décrit un procédé reprenant ce principe général, avec toutefois les particularités suivantes. Premièrement, le procédé Colmade réalise le calcul du score et la comparaison avec un seuil dans le domaine chiffré. Deuxièmement, le procédé Colmade comprend des étapes centralisées, et des étapes distribuées sur plusieurs entités : ces entités réalisent des calculs en parallèle produisant des résultats partiels, ces résultats partiels devant être ensuite recombinés afin d'aboutir au résultat de contrôle.

Or, la durée d'exécution du procédé Colmade s'avère longue.

En particulier, une opération assez coûteuse en chiffrement homomorphe est la multiplication.

Bassit, Amina, et al. "Multiplication-free biometric recognition for faster processing under encryption." 2022 IEEE International Joint Conference on Biometrics (IJCB). IEEE, 2022 propose de calculer le chiffré du score en ayant recours à des tables de correspondance précalculées (Look-up table en anglais). La fonction mathématique f pour calculer le chiffré du score est la somme de sous-fonctions $f_1,..., f_d$. Les différentes tables de correspondances utilisées représentent ces sous-fonctions. Ainsi, pour obtenir le chiffré du score, il suffit de déterminer d portions du chiffré par recherche dans les d tables de correspondances, puis de sommer ces $d$ portions. Vu que ce traitement n'utilise que des tables et des additions, il est très léger en termes de charge de calcul.

Toutefois, cette solution n'est pas entièrement satisfaisante.

Premièrement, cette solution est mise en œuvre dans un système comprenant un fournisseur de service (SP) possédant une clé de déchiffrement sk et un serveur de stockage (DB) stockant des chiffrés de données biométrique de référence qui n'a pas connaissance de la clé de déchiffrement sk. Le serveur de stockage renvoie au fournisseur de service le chiffré d'une information indiquant si une donnée biométrique d'épreuve correspond à une donnée biométrique de référence, et le fournisseur de service déchiffre ce chiffré à l'aide de sa clé de déchiffrement sk. Or, en cas de collusion entre SP (qui possède sk) et le serveur de stockage DB (qui a les chiffrés des données biométriques de référence), la base constituée par les chiffrés des données biométriques de référence peut être dévoilée.

Deuxièmement, la première solution proposée présente un seuillage pouvant être utilisé dans le domaine chiffré, sans astuce, et est donc peu performante. La deuxième solution alternative proposée présente un seuillage effectué après déchiffrement, et donc en clair. Cela entraine un problème de sécurité et n'est donc pas satisfaisant.

**EXPOSE DE L'INVENTION**

Un but de l'invention est de vérifier si un individu est enrôlé dans une base de données sans requérir une durée d'exécution excessive et de manière sécurisée.

Ce but est atteint par un procédé comprenant des étapes de :

- calcul d'un chiffré d'un score masqué, le score masqué représentant le résultat de l'application d'un masque primaire r à un score représentant une distance entre une donnée biométrique d'épreuve x se rapportant à un individu et une donnée biométrique de référence $y_u$, le calcul comprenant :

    - pour tout j allant de 1 à k et pour tout i allant de 1 à d, avec $k \geq 1$ et $d \geq 2$, détermination dans une table de correspondance précalculée d'un terme égal à $(T_{i,j} + \langle r \rangle_{i,j}) \bmod 2^n$ en correspondance avec une paire constituée d'une portion de la donnée biométrique d'épreuve x et d'une portion d'un chiffré $c_{y_u}$ de la donnée biométrique de référence, où :

- le chiffré de la donnée biométrique de référence $c_{y_u}$ résulte d'un chiffrement de la donnée biométrique de référence $y_u$ à l'aide d'une clé de chiffrement primaire pk,
- n est un entier prédéfini,
- une somme $\left(\sum_{i=1}^{d} \sum_{j=1}^{k} T_{i,j}\right) mod\ 2^n$ des tables $T_{i,j}$ constitue une estimée d'un chiffré du score sous forme non masquée,
- le masque primaire $r$ est relié à des masques secondaires $\langle r \rangle_{i,j}$ par la relation suivante:

$$\left(\sum_{i=1}^{d} \sum_{j=1}^{k} \langle r \rangle_{i,j}\right) mod\ 2^n = r\ mod\ 2^n ,$$

- mise en œuvre de la sommation suivante de sorte à obtenir le chiffré du score masqué :

$$\sum_{i=1}^{d} \sum_{j=1}^{k} \left(T_{i,j} + \langle r \rangle_{i,j}\right) mod\ 2^n ;$$

- pour tout i allant de 1 à d, mise en œuvre des étapes suivantes par un dispositif de déchiffrement d'indice i:

   - déchiffrement du chiffré du score masqué à l'aide d'une clé de déchiffrement secondaire $\langle sk \rangle_i$ d'indice i, le déchiffrement produisant une donnée $\acute{s}$ représentant le score masqué modulo $2^n$,
   - génération d'un résultat partiel $o_i$ d'indice i à partir de la donnée $\acute{s}$ et d'une donnée de démasquage $k_i$ d'indice i,

- dans lequel :

   - les clés de déchiffrement secondaires $\langle sk \rangle_1,...,\langle sk \rangle_d$ d'indices respectifs allant de 1 à d sont issues d'une clé de déchiffrement primaire sk associée à la clé de chiffrement pk,
   - les résultats partiels $o_1,...,o_d$ d'indices respectifs allant de 1 à d permettent le calcul d'un résultat de contrôle o indiquant si la donnée biométrique d'épreuve $x$ correspond ou non à la donnée biométrique de référence.

Dans le procédé proposé, le déchiffrement du chiffré du score masqué, qui a lieu en même temps que la génération du résultat partiel, représentatif de la comparaison avec un seuil, est distribué entre plusieurs dispositifs de déchiffrement d'indice i. Cela diminue le risque de collusion.

Le procédé proposé peut également comprendre les caractéristiques optionnelles suivantes, prises seules ou en combinaison à chaque fois que cela est possible :

- la détermination du terme $(T_{i,j} + \langle r \rangle_{i,j})\ mod\ 2^n$ comprend les étapes suivantes :

   - détermination dans une première table de correspondance d'indice i d'un pointeur d'indice i en correspondance avec la paire, le pointeur d'indice i pointant vers une position, dans une deuxième table de $2^n$ termes, où le terme d'indice i est stocké,
   - détermination du terme d'indice i dans la deuxième table à l'aide du pointeur d'indice i ;

- le procédé comprend en outre des étapes de :

   - permutation de la deuxième table, puis
   - répétition du calcul du chiffré du score masqué pour une nouvelle donnée biométrique d'épreuve ;

- on a $k > 1$, pour tout j allant de 1 à k et pour tout i allant de 1 à d, la détermination du terme égal à $(T_{i,j} + \langle r \rangle_{i,j})\ mod\ 2^n$ est mise en œuvre par un serveur de stockage 2 d'indice j, pour tout j allant de 1 à k, le serveur d'indice j calcule une portion d'indice j du chiffré du score masqué par la sommation suivante : $\sum_{i=1}^{d} \left(T_{i,j} + \langle r \rangle_{i,j}\right) mod\ 2^n$, et pour tout i allant de 1 à d, le dispositif de déchiffrement d'indice i calcul le chiffré du score masqué par sommation des portions d'indices respectifs allant de 1 à k du chiffré du score masqué ;
- on a $k = 1$ et le calcul du chiffré du score masqué est mis en œuvre par un unique serveur de stockage ;
- le déchiffrement mis en en œuvre par le dispositif de déchiffrement d'indice i comprend les étapes suivantes :

   - calcul d'une donnée intermédiaire $\langle c_{\hat{s}_b} \rangle_i$ d'indice i à partir des données suivantes :

      ◦ une première partie $c_{s_b}$ du chiffré du score masqué,

- ◦ la clé de déchiffrement secondaire $\langle sk \rangle_i$ d'indice i, et
- ◦ un aléa $e_i$ généré par le dispositif d'indice de déchiffrement i,

- • pour tout dispositif de déchiffrement d'indice j≠i, réception d'une donnée intermédiaire $\langle c_{\hat{s}_b} \rangle_j$ d'indice j envoyée par le dispositif de déchiffrement d'indice j,
- • calcul de la donnée $\hat{s}$ représentant le score masqué à partir des données suivantes :

- ◦ les données intermédiaires $\langle c_{\hat{s}_b} \rangle_1, \ldots, \langle c_{\hat{s}_b} \rangle_d$ d'indices respectifs allant de 1 à d,
- ◦ une deuxième partie $c_{s_a}$ du chiffré du score masqué ;

- la donnée intermédiaire $\langle c_{\hat{s}_b} \rangle_i$ d'indice i est calculée comme suit :

$$\langle c_{\hat{s}_b} \rangle_i = c_{s_b} \langle sk \rangle_i + e_i$$

dans lequel $c_{s_b}$ est la première partie du chiffré $c_s$ du score masqué, $\langle sk \rangle_i$ est la clé de déchiffrement secondaire d'indice i, et $e_i$ est l'aléa généré par le dispositif d'indice i ;
- la donnée $\hat{s}$ représentant le score masqué modulo $2^n$ est calculée comme suit :

$$\hat{s} = \left[ \left[ \frac{t}{q} \left[ c_{s_a} + \sum_{i=1}^{d} \langle c_{\hat{s}_b} \rangle_i \right]_q \right]_t \right] \bmod 2^n$$

dans lequel $\langle c_{\hat{s}_b} \rangle_i$ est la donnée intermédiaire d'indice i, $c_{s_a}$ est la deuxième partie du chiffré ($c_s$) du score, $t$ et $q$ sont deux entiers constituant des paramètres d'un schéma de chiffrement de Brakerski/Fan-Vercauteren, $\lceil \cdot \rfloor$ désigne l'opérateur d'arrondi à l'entier le plus proche, $[.]_q$ désigne l'opérateur modulo q, $[.]_t$ désigne l'opérateur modulo t.
- le résultat de contrôle o est égal à la somme des résultats partiels $o_1, \ldots, o_d$ d'indices respectifs allant de 1 à d ;
- au moins une des données suivantes est une donnée à usage unique pour la donnée biométrique d'épreuve x, voire pour le chiffré du score masqué :

- • la donnée de démasquage d'indice i,
- • la clé de déchiffrement secondaire d'indice i.

La présente divulgation concerne également un produit programme d'ordinateur comprenant des instructions de code de programme pour l'exécution des étapes du procédé décrit précédemment, lorsque ce programme est exécuté par un système.

La présente divulgation concerne également une mémoire lisible par ordinateur stockant des instructions exécutables pour l'exécution des étapes du procédé décrit précédemment.

Selon un autre aspect, la présente divulgation concerne un système comprenant un dispositif de contrôle, un serveur de stockage, au moins deux dispositifs de déchiffrement, un serveur de confiance et un dispositif d'enrôlement, dans lequel lesdits dispositifs et serveurs comportent des processeurs configurés pour mettre en œuvre les étapes du procédé décrit précédemment.

Le procédé décrit précédemment peut être mis en œuvre par un procédé de contrôle d'accès d'un individu à une zone sécurisée pour une identification de l'individu.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

La figure 1 illustre de façon schématique des interactions entre différents dispositifs faisant partie d'un système selon un mode de réalisation, utilisable pour contrôler l'identité d'individus.

La figure 2 illustre de façon schématique différents dispositifs faisant partie d'un système selon un mode de réalisation.

La figure 3 est un organigramme d'étapes d'un procédé selon un mode de mise en œuvre.

Sur l'ensemble des figures, les éléments similaires portent des références identiques.

## DESCRIPTION DETAILLEE DE L'INVENTION

Dans la description qui suit, les conventions suivantes sont adoptées :

- Un chiffré d'une donnée représente le résultat d'un chiffrement appliqué à la donnée.

- Une donnée masquée représente le résultat d'un masquage appliqué à cette donnée.

- En combinant les deux principes qui précèdent, le « chiffré d'une donnée masquée » représente le résultat d'un chiffrement appliqué à une donnée masquée, cette donnée masquée représentant elle-même le résultat d'un masquage appliqué à la donnée.

- Une sommation modulo $2^n$ de termes est une opération comprenant une sommation des termes, suivie de l'application de l'opérateur modulo $2^n$ à la somme obtenue.

### Système pour contrôler l'identité d'un individu

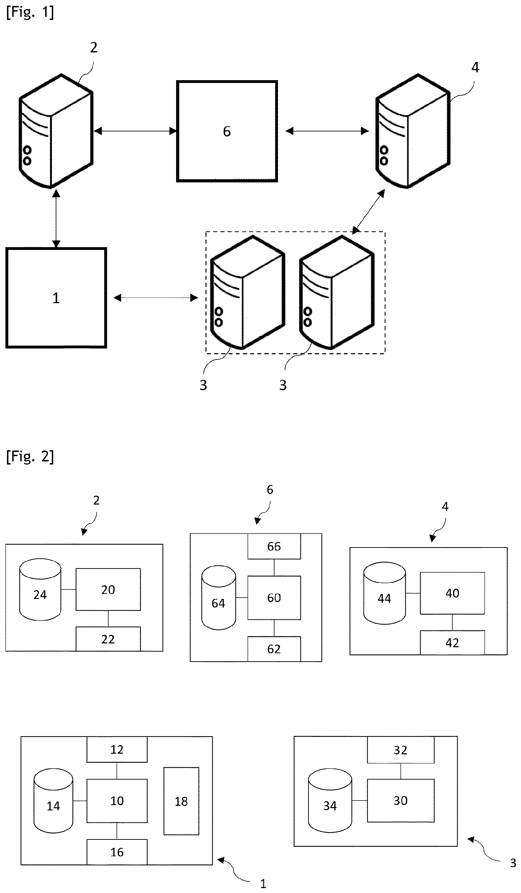

En référence aux **figures 1 et 2,** un système comprend un dispositif de contrôle 1, au moins un serveur de stockage 2, au moins deux dispositifs de déchiffrement 3 un serveur de confiance 4 et un dispositif d'enrôlement 6.

On note k le nombre de serveurs de stockage 2 du système, on a $k \geq 1$. Par convention, on utilisera l'indice muet j pour désigner l'un ou l'autre des serveurs de stockage 2.

On note par ailleurs d le nombre de dispositifs de déchiffrement 3, on a $d \geq 2$. Par convention, on utilisera l'indice muet i pour désigner l'un ou l'autre des dispositifs de déchiffrement 3.

Le dispositif de contrôle 1 comprend un processeur 10, une interface de communication 12 pour communiquer avec le serveur de stockage 2, une mémoire 14 et un capteur biométrique 16.

Le processeur 10 est configuré pour mettre en œuvre certaines étapes d'un procédé qui sera décrit plus loin. Le processeur 10 peut avoir n'importe quelle structure. Le processeur 10 comprend un ou plusieurs cœurs, chaque cœur étant configuré pour exécuter les instructions de code d'un programme de manière à mettre en œuvre les étapes précitées.

L'interface de communication 12 est par exemple de type radio sans fil, et utilise un protocole de communication quelconque (Wi-Fi, Bluetooth, etc.).

La mémoire 14 est adaptée pour mémoriser des données manipulées ou produites par le processeur 10. La mémoire 14 est de type quelconque. Conventionnellement, la mémoire 14 comprend une mémoire volatile pour stocker des données temporairement, et une mémoire non-volatile pour stocker des données de manière persistante, c'est-à-dire d'une manière qui conserve les données lors d'une mise hors tension de la mémoire non volatile.

Le capteur biométrique 16 est configuré pour acquérir des données biométriques se rapportant à des individus. Par exemple, le capteur biométrique 16 comprend une caméra configurée pour acquérir des images montrant le visage d'un individu, et pour extraire des données biométriques de telles images. Alternativement ou à titre complémentaire, le capteur biométrique 16 comprend un capteur d'empreinte digitale et/ou un capteur d'iris.

Dans un mode de réalisation, le dispositif de contrôle 1 comprend en outre un portique 18 pouvant être fermé pour empêcher un individu d'accéder à une zone sécurisée, et être ouvert pour autoriser un tel accès. Le processeur 10 est dans ce cas configuré pour commander l'ouverture et la fermeture du portique 18. Par exemple, le dispositif de contrôle 1 se trouve dans un aéroport, et la zone sécurisée est une zone d'embarquement ; dans cette application particulière, les individus souhaitant accéder à la zone d'embarquement sont les passagers d'un vol, dont l'identité est à contrôler avant d'embarquer.

Sur la figure 1, un seul serveur de stockage 2 est représenté, mais ceci n'est qu'un exemple. Chaque serveur de stockage 2 comprend un processeur 20, une interface de communication 22 pour communiquer avec le dispositif de contrôle 1, et une mémoire 24. Les informations fournies ci-dessus à propos du processeur 10 et de l'interface de communication 12 sont applicables également au processeur 20 et à l'interface de communication 22.

La mémoire 24 stocke une base de données biométriques protégées en confidentialité. Sont référencées dans la base de données des données biométriques se rapportant à des individus précédemment enrôlés. Les données biométriques d'un individu enrôlé ne sont pas en clair dans la base de données, mais sont au contraire protégées en confidentialité, c'est-à-dire sont une forme chiffrée, grâce à un chiffrement homomorphe.

La mémoire 24 stocke par ailleurs des tables de correspondance précalculées, permettant d'obtenir le résultat d'une fonction mathématique appliquée à des données d'entrée (cette fonction mathématique sera décrite plus amplement dans la suite). On notera que l'expression « table de correspondance » doit s'entendre comme tout ensemble de données organisées permettant d'établir sans calcul des correspondances entre les antécédents et les images de cette fonction mathématique.

Chaque dispositif de déchiffrement 3 comprend un processeur 30, une interface de communication 32 pour communiquer avec le dispositif de contrôle 1 et/ou les autres dispositifs de déchiffrement 3, et une mémoire 34. Les informations fournies ci-dessus à propos du processeur 10 et de l'interface de communication 12 sont applicables également au processeur 30 et à l'interface de communication 32. Les communications entre les interfaces 12, 22 et les communications entre les interfaces 12, 32 peuvent utiliser des protocoles identiques ou bien différents.

Les dispositifs de déchiffrement 3 sont distincts les uns des autres. Dans la suite, on va détailler un mode de réalisation dans lequel les dispositifs de déchiffrement 3 sont distincts du dispositif de contrôle 1, de chaque serveur de stockage 2, du dispositif d'enrôlement 4 et du dispositif d'enrôlement 6, comme cela est représenté sur la figure 1. Toutefois, dans d'autres modes de réalisation, il peut être envisagé que le dispositif de contrôle 1, le serveur de stockage 2, le dispositif d'enrôlement 4 et/ou le dispositif d'enrôlement 6 soit compris dans l'un des dispositifs de déchiffrement 3.

Le serveur de confiance 4 a pour fonction de générer des clés cryptographiques dont certaines sont utilisées par d'autres composants du système. Le serveur de confiance 4 comprend un processeur 40, une interface de communication 42 pour communiquer avec le dispositif d'enrôlement 6 et avec chaque dispositif de déchiffrement 3, et une mémoire 44. Les informations fournies ci-dessus à propos du processeur 10, de l'interface de communication 12 et de la mémoire 14 sont applicables également au processeur 40, à l'interface de communication 42 et à la mémoire 44.

Le dispositif d'enrôlement 6 comprend un processeur 60, une interface de communication 62 pour communiquer avec le serveur de confiance 4 et avec le serveur de stockage 2, une mémoire 64 et un capteur biométrique 66. Les informations fournies ci-dessus à propos du processeur 10, de l'interface de communication 12, de la mémoire 14 et du capteur biométrique 16 sont applicables également au processeur 60, à l'interface 62, à la mémoire 64 et au capteur biométrique 66. Dans la suite, on va détailler un mode de réalisation dans lequel le dispositif d'enrôlement 6 est distinct du dispositif de contrôle 1. Toutefois, dans d'autres modes de réalisation, le dispositif de contrôle 1 pourrait être utilisé comme dispositif d'enrôlement.

**Tables de correspondance**

Notons $y_u$ une donnée biométrique de référence. On a vu précédemment que la mémoire 24 d'un serveur de stockage 2 ne stocke pas la donnée $y_u$, mais plutôt un chiffré $c_{y_u}$ de cette donnée. Plus précisément, le chiffré $c_{y_u}$ de la donnée biométrique de référence $y_u$ résulte d'un chiffrement de la donnée biométrique de référence $y_u$ à l'aide d'une clé de chiffrement primaire pk. Ceci est vrai pour chaque donnée biométrique de référence stockée sous forme chiffrée dans le ou les serveur(s) de stockage 2. Le chiffrement est homomorphe.

Une opération classique consiste à calculer un score s représentatif d'une distance entre une donnée biométrique d'épreuve x et une donnée biométrique de référence $y_u$ mémorisée. La distance représentée par le score est par exemple un produit scalaire entre la donnée biométrique d'épreuve x et la donnée biométrique de référence $y_u$.

Il est possible de calculer un chiffré $c_s$ du score représentatif de la distance entre la donnée biométrique d'épreuve x et la donnée biométrique de référence $y_u$, et ce tout en restant dans le domaine chiffré à l'aide de la clé pk. Il existe en particulier une fonction de score f, connue de l'homme du métier, qui produit ce chiffré, comme expliqué dans Bassit, Amina, et al. "Multiplication-free biometric recognition for faster processing under encryption." 2022 IEEE International Joint Conference on Biometrics (IJCB). IEEE, 2022. On comprend ainsi que le chiffré $c_s$ est un score obtenu à partir des données x et $c_{y_u}$ (on remarquera ici que la donnée d'entrée $c_{y_u}$ est déjà chiffrée, alors que x ne n'est pas). On a donc :

$$c_s = f\left(x, c_{y_u}\right)$$

La fonction de score f est elle-même décomposable en $d \times k$ sous-fonctions $f_{i,j}$ connues de l'homme du métier, qui respectent la propriété suivante d'additivité :

$$c_s = f\left(x, c_{y_u}\right) = \sum_{i=1}^{d} \sum_{j=1}^{k} f_{i,j}\left(p_{i,j}, ref_{i,j}\right)$$

où :

- $p_{i,j}$ est une portion de la donnée biométrique d'entrée x.
- $ref_{i,j}$ est une portion du chiffré $c_{y_u}$ de la donnée biométrique de référence $y_u$.

Les portions $p_{i,j}$, $ref_{i,j}$, ont été déterminées en amont par un traitement de quantification connu de l'état de la technique, par exemple tel que décrit dans Bassit, Amina, et al. "Multiplication-free biometric recognition for faster processing under encryption." 2022 **IEEE** International Joint Conference on Biometrics (IJCB). IEEE, 2022.

Pour rappel, les indices i et j parcourent les entiers de 1 à d, nombre de dispositifs de chiffrement 3, et les entiers de 1 à k, nombre de serveurs de stockage 2, respectivement.

Un avantage de cette décomposition est qu'il est moins coûteux en calcul de passer par les sous-fonctions $f_{i,j}$ avant de sommer leurs images respectives pour obtenir le score $c_s$. En particulier, l'addition est une opération peu coûteuse.

Supposons à présent que l'on remplace les sous-fonctions $f_{i,j}$ par des tables de correspondance précalculées $T_{i,j}$. A partir d'une paire de valeurs $p_{i,j}$, $ref_{i,j}$, la table $T_{i,j}$ serait capable de fournir, par un jeu de correspondance, la valeur de sortie $f_{i,j}(p_{i,j}, ref_{i,j})$. Il y a donc une table de correspondance $T_{i,j}$ par sous-fonction $f_{i,j}$. En d'autres termes, chaque table $T_{i,j}$ fournirait le terme suivant, constituant une portion du chiffré $c_s$ :

$$T_{i,j}(p_{i,j}, ref_{i,j}) \approx f_{i,j}(p_{i,j}, ref_{i,j})$$

Il suffirait ensuite de sommer les $d \times k$ portions fournies pour obtenir une estimée du résultat de la fonction f, autrement dit pour obtenir le chiffré $c_s$ du score s, comme suit :

$$c_s = f(x, c_{y_u}) \approx \sum_{i=1}^{d} \sum_{j=1}^{k} T_{i,j}(p_{i,j}, ref_{i,j})$$

Avec de telles tables, on réduirait encore les ressources de calcul nécessaires pour obtenir le chiffré $c_s$ du score $s$ : en effet, il est moins coûteux de rechercher dans une table de correspondance précalculée $T_{i,j}$ une sortie correspondant à des données d'entrée que d'appliquer la sous-fonction $f_{i,j}$ à ces mêmes données d'entrée.

On va à présent voir que les serveurs de stockage 2 stockent des tables de correspondance $S_{i,j}$ plus complexes que les tables $T_{i,j}$, car les tables $S_{i,j}$ intègrent en leur sein une opération implicite de masquage du score s.

Pour tout j allant de 1 à k, le serveur de stockage d'indice j stocke d tables de correspondance $S_{1,j}, ..., S_{i,j}, ..., S_{d,j}$. Il y a donc, pour chaque serveur de stockage 2, une table de correspondance $S_{i,j}$ pour chaque dispositif de chiffrement 3 d'indice i.

Le but de la table de correspondance $S_{i,j}$ est non pas d'obtenir une portion du chiffré du score s représentatif d'une distance entre $x$ et $y_u$, comme présenté ci-dessus, mais d'obtenir une portion du chiffré d'un score masqué, ce score masqué résultant d'un masquage du score s à l'aide d'un masque primaire $r$. On note $c_{s+r}$ le chiffré du score masqué.

La table de correspondance $S_{i,j}$ est construite de sorte à retourner le terme suivant, à partir des portions $p_{i,j}$ et $ref_{i,j}$ :

$$S_{i,j}(p_{i,j}, ref_{i,j}) = (T_{i,j}(p_{i,j}, ref_{i,j}) + \langle r \rangle_{i,j}) \, mod \, 2^n$$

où :

- $n$ est un entier prédéfini supérieur ou égal à 1,
- $\langle r \rangle_{i,j}$ est un masque secondaire constituant une portion du masque primaire r,
- $mod$ désigne l'opérateur modulo.

Les masques secondaires $\langle r \rangle_{i,j}$ sont liés entre eux par la relation suivante :

$$\left( \sum_{i=1}^{d} \sum_{j=1}^{k} \langle r \rangle_{i,j} \right) mod \, 2^n = r \, mod \, 2^n$$

Par ailleurs, dans le même esprit que le scénario décrit précédemment n'utilisant pas de masquage, $\left( \sum_{i=1}^{d} \sum_{j=1}^{k} T_{i,j} \right) mod \, 2^n$ constitue une estimée du chiffré $c_s$ du score $s$ (sous forme non masquée).

On notera que l'opération modulo $2^n$ est une opération coûteuse dans le domaine chiffré. Comme cette opération est intégrée dans les tables de correspondance $S_{i,j}$, elle n'aura pas à être appliquée.

Comme on le verra par la suite, en sommant les $d \times k$ termes fournis par les tables $S_{i,j}$, on obtient non pas le chiffré $c_s$ du score $s$, mais le chiffré $c_{s+r}$ du score masqué $s + r$ :

$$c_{s+r} = \sum_{i=1}^{d} \sum_{j=1}^{k} S_{i,j}\left(p_{i,j}, ref_{i,j}\right)$$

**Génération de clés, de masques et de tables de correspondance**

Les étapes suivantes sont mises en œuvre à titre préliminaire au sein du système.

Le processeur 40 du serveur de confiance 4 génère la clé de chiffrement pk et une clé de déchiffrement sk associée, les deux clés formant une paire de clés cryptographiques, typiquement une paire de clés asymétriques. Les clés sont par exemple générées aléatoirement.

Les clés pk, sk sont mémorisées dans la mémoire 44.

Le serveur de confiance 4 envoie au dispositif d'enrôlement la clé de chiffrement pk, qui est par conséquent une clé publique. La clé de déchiffrement sk est au contraire une clé privée propre au serveur de confiance 4, et qui n'est donc pas communiquée à l'extérieur du serveur de confiance 4.

Par ailleurs, les tables de correspondances $S_{i,j}$ sont précalculées de sorte à respecter les contraintes définies précédemment. Ce précalcul se fonde sur la connaissance préalable des d masques secondaires $\langle r \rangle_1,...,\langle r \rangle_d$, qui découlent eux-mêmes du masque primaire $r$. Le masque primaire peut être généré également par le processeur 40 du serveur de confiance 4. Le masque primaire $r$ peut être généré par la fonction *Furshade.Setup*() décrite dans Ibarrondo et al., Funshade : Functional Secret Sharing for Two-Party Secure Thresholded Distance Evaluation, Cryptology ePrint Archive, Paper 2022/1688, 2022.

**Enrôlement**

On suppose qu'un individu de référence à enrôler se présente à proximité du dispositif d'enrôlement 6. En pratique, l'individu de référence peut être un individu ayant obtenu le droit d'accéder à la zone sécurisée discutée précédemment. Lorsque le dispositif de contrôle 1 est placé dans un aéroport, la zone sécurisée peut donner accès à un avion, auquel cas le droit d'accéder à la zone sécurisée est conféré par un titre de transport attribué à l'individu de référence.

Le capteur biométrique 66 du dispositif d'enrôlement 6 acquiert une donnée biométrique de référence $y_u$ se rapportant à l'individu de référence.

Le processeur 60 chiffre la donnée biométrique $y_u$ de référence à l'aide de la clé de chiffrement pk, de sorte à obtenir le chiffré $c_{y_u}$ de la donnée biométrique $y_u$. En particulier, il est possible d'utiliser lors de cette étape un chiffrement selon le schéma Brakerski -Fan-Vercauteren (BFV) tel que décrit dans Fan, Junfeng, and Frederik Vercauteren. « Somewhat practical fully homomorphic encryption. » Cryptology ePrint Archive (2012).

Le chiffré $c_{y_u}$ est transmis par le dispositif d'enrôlement 6 au serveur de stockage 2 via l'interface de communication 62.

Le serveur de stockage 2 reçoit le chiffré $c_{y_u}$ via son interface de communication 22, et l'ajoute dans la base de données contenue dans sa mémoire 24. L'individu de référence est alors enrôlé.

Les étapes qui précèdent sont répétées par le dispositif d'enrôlement 6 pour plusieurs individus de référence à enrôler, moyennant quoi la base de données contenue dans la mémoire 24 stocke une pluralité de chiffrés, chaque chiffré se rapportant à un individu de référence différent. A chaque fois, la même clé de chiffrement pk est utilisée par le processeur 60.

**Contrôle d'identité**

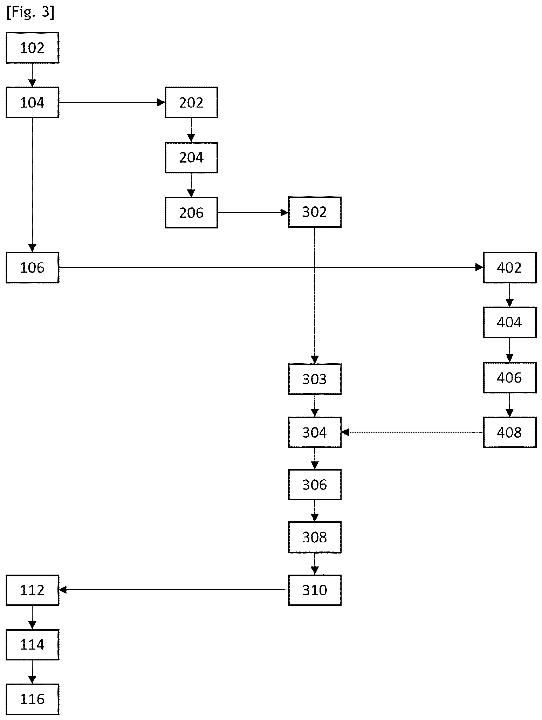

En référence à la **figure 3,** un procédé mis en oeuvre au moyen du système comprend les étapes suivantes. Lorsqu'il sera mentionné dans la suite que le dispositif de contrôle 1, un serveur de stockage 2, un dispositif de déchiffrement 3 ou le serveur de confiance 4 met en œuvre un traitement, on comprendra que ce traitement est plus précisément mis en œuvre par le processeur correspondant 10, 20, 30, 40.

On suppose qu'un individu dont l'identité est à contrôler se présente à proximité du dispositif de contrôle 1. Par exemple, l'individu à contrôler se présente à une porte d'embarquement d'un aéroport où a été installé le dispositif de contrôle 1, avec la volonté de monter à bord d'un avion.

Dans une étape 102, le capteur biométrique 16 acquiert une donnée biométrique $x$ se rapportant l'individu à contrôler. Dans la suite, cette donnée biométrique $x$ est appelée « donnée biométrique d'épreuve » afin de la distinguer des données biométriques de référence discutées précédemment, et dont les chiffrés respectifs sont stockés par le serveur de stockage 2.

Dans une étape 104, le dispositif de contrôle 1 envoie, pour tout j allant de 1 à k, la donnée biométrique d'épreuve $x$ au serveur de stockage 2 d'indice j via l'interface de communication 12. Autrement dit, les k serveurs de stockage 2 reçoivent la donnée biométrique d'épreuve x.

Par ailleurs, dans une étape 106, le dispositif de contrôle 1 envoie au serveur de confiance 4 une requête associée à la donnée d'épreuve x.

Les étapes 104 et 106 peuvent être réalisées dans n'importe quel ordre.

Dans une étape 202, le serveur de stockage 2 d'indice j reçoit la donnée biométrique d'épreuve x via l'interface de communication 22.

Dans une étape 204, le serveur de stockage 2 d'indice j détermine dans la table de correspondance précalculée $S_{i,j}$ le terme égal $(T_{i,j}(p_{i,j}, ref_{i,j}) + \langle r \rangle_{i,j}) \bmod 2^n$ en correspondance avec la paire constituée de la portion $p_{i,j}$ de la donnée biométrique d'épreuve $x$ et de la portion $ref_{i,j}$ du chiffré $c_{y_u}$ de la donnée biométrique de référence.

Au cours de l'étape 204, le serveur de stockage 2 d'indice j répète cette détermination pour tout i allant de 1 à d et détermine donc d termes $S_{i,j}(p_{i,j}, ref_{i,j})$ constituant d portions du chiffré $c_{s+r}$ du score s masqué par le masque primaire r, chaque portion correspondant à une table de correspondance $S_{i,j}$ et donc à un dispositif de chiffrement 3.

Cette étape 204 est rapide d'exécution du fait de l'utilisation de tables de correspondance précalculées $S_{i,j}$.

Dans une étape 206, le serveur de stockage 2 d'indice j transmet les d termes $S_{i,j}(p_{i,j}, ref_{i,j})$ qu'il a déterminés à chacun des d dispositifs de déchiffrement 3. Chaque serveur de stockage 2 d'indice j comprenant une table de correspondance $S_{i,j}$ pour chaque dispositif de chiffrement 3 d'indice i, il y a donc $d \times k$ tables de correspondance au total.

Dans une étape 402, le serveur de confiance 4 reçoit la requête émise lors de l'étape 106.

Dans une étape 404, le serveur de confiance 4 génère d clés de déchiffrement secondaires $\langle sk \rangle_1, ..., \langle sk \rangle_d$ issues de la clé de déchiffrement sk, soit une pour chaque dispositif de chiffrement 3.

Dans une étape 406, le serveur de confiance 4 génère $d$ données de démasquage $k_1, ..., k_d$ qui sont associées au masque primaire $r$.

Les étapes 404 et 406 peuvent être mises en œuvre dans n'importe quel ordre.

Dans une étape 408 mise en œuvre pour tout i allant de 1 à d, le serveur de confiance 4 transmet au dispositif de déchiffrement 3 d'indice i :

- la clé de déchiffrement secondaire $\langle sk \rangle_i$ d'indice i,
- la donnée de démasquage $k_i$ d'indice i.

En revanche, une quelconque donnée d'indice i générée par le serveur de confiance 4 dans les étapes 404, 406 n'est pas envoyée à un quelconque dispositif de déchiffrement 3 d'indice j différent de i.

Pour tout i allant de 1 à d, le dispositif de déchiffrement 3 d'indice i met en œuvre les étapes suivantes.

Dans une étape 302, le dispositif de déchiffrement 3 d'indice i reçoit les $d \times k$ termes $S_{i,j}(p_{i,j}, ref_{i,j})$, qui lui ont été envoyés par les k serveur de stockage 2. On rappelle que chaque serveur de stockage 2 sollicité fournit $d$ termes.

Dans une étape 303, le dispositif de déchiffrement 3 d'indice i calcule le chiffré $c_{s+r}$ du score masqué $s + r$ en effectuant une sommation des $dk$ portions qu'il a reçues à l'étape 302, comme suit :

$$\sum_{i=1}^{d} \sum_{j=1}^{k} S_{i,j}$$

Chacun des d dispositifs de chiffrement 3 effectue cette opération. Dans une étape 304, le dispositif de déchiffrement 3 d'indice i reçoit :

- la clé de déchiffrement secondaire $\langle sk \rangle_i$ d'indice i,
- la donnée de démasquage $k_i$ d'indice i.

Les étapes 302 et 304 peuvent survenir dans n'importe quel ordre, selon la façon dont le dispositif de contrôle 1 opère.

Dans une étape 306, le dispositif de déchiffrement 3 d'indice i applique un traitement de déchiffrement *ColMaskDecr*( ) au chiffré du score masqué, tel que décrit dans Ibarrondo, Alberto, et al. "Colmade: Collaborative masking in auditable decryption for bfv-based homomorphic encryption." Proceedings of the 2022 ACM Workshop on Information Hiding and Multimedia Security, 2022. Ce traitement produit une donnée $\hat{s}$ représentant le score sous une forme déchiffrée à l'aide de la clé de déchiffrement primaire, mais encore masquée à l'aide du masque primaire r. On peut ainsi noter :

$$\hat{s} = ColMaskDecr(c_{s+r}, \langle sk \rangle_i)$$

Si l'on déchiffrait le chiffré $c_s$ à l'aide de la clé de déchiffrement primaire sk, on n'obtiendrait pas le score s en clair, mais le score masqué à l'aide du masque primaire r. Le traitement de déchiffrement et de masquage *ColMaskDecr( )* a pour propriété de parvenir à la donnée *ŝ* sans réaliser de calcul intermédiaire du score s en clair. En effet, le chiffré pris en entrée se rapporte déjà à un score masqué, et non au score s en clair.

On va maintenant détailler un mode de réalisation du traitement de déchiffrement et de masquage *ColMaskDecr()*. Dans ce mode de réalisation, le chiffré $c_{s+r}$ du score masqué se présente sous la forme d'une paire de données $c_{s_a}$, $c_{s_b}$. Ces deux données constituent deux portions différentes du chiffré $c_{s+r}$.

Le dispositif de déchiffrement 3 d'indice i calcule une donnée intermédiaire $\langle c_{\hat{s}_b} \rangle_i$ d'indice i à partir des données suivantes : la partie $c_{s_b}$ du chiffré $c_{s+r}$, la clé de déchiffrement secondaire $\langle \text{sk} \rangle_i$ d'indice i, et un aléa $e_i$ généré par le dispositif d'indice i.

Ce calcul peut être le suivant :

$$\langle c_{\hat{s}_b} \rangle_i = c_{s_b} \langle \text{sk} \rangle_i + e_i$$

Le dispositif de déchiffrement 3 d'indice i envoie la donnée intermédiaire $\langle c_{\hat{s}_b} \rangle_i$ d'indice i à tout autre dispositif de déchiffrement 3 d'indice j≠i. Par ailleurs, le dispositif de déchiffrement 3 d'indice i reçoit une donnée intermédiaire $\langle c_{\hat{s}_b} \rangle_i$ d'indice j≠i produite par tout autre dispositif de déchiffrement d'indice j≠i.

Le dispositif de déchiffrement 3 d'indice i calcule la donnée *ŝ* à partir des données intermédiaires $\langle c_{\hat{s}_b} \rangle_1$, $\langle c_{\hat{s}_b} \rangle_2$, et à partir de la partie $c_{s_a}$ du chiffré $c_s$. Ce calcul peut être réalisé comme suit :

$$\hat{s} = \left[ \left[ \frac{t}{q} \left[ c_{s_a} + \sum_{i=1}^{d} \langle c_{\hat{s}_b} \rangle_i \right]_q \right] \right]_t$$

• dans lequel

- $\langle c_{\hat{s}_b} \rangle_i$ est la donnée intermédiaire d'indice i (calculée ou reçue),
- $c_{s_a}$ est la deuxième partie du chiffré $c_{s+r}$,
- t et q sont deux entiers constituant des paramètres d'un schéma de chiffrement de Brakerski-Fan-Vercauteren,
- $\lfloor ... \rceil$ désigne l'opérateur d'arrondi à l'entier le plus proche,
- $[...]_q$ désigne l'opérateur modulo q,
- $[...]_t$ désigne l'opérateur modulo t.

Dans ce mode de réalisation, on a :

$$\hat{s} \equiv s + r$$

Dans cette équation, le signe ≡ représente une égalité. Ainsi, la donnée *ŝ* s'avère être le score masqué, c'est-à-dire la somme du score s en clair et du masque primaire *r*.

Dans une étape 308, le dispositif de déchiffrement 3 d'indice i calcule un résultat partiel $o_i$ d'indice i à partir de la donnée et de la donnée de démasquage $k_i$ d'indice i :

$$o_i = FSS. eval(\hat{s}, k_i)$$

L'obtention du résultat partiel est décrite dans Ibarrondo et al., Funshade : Functional Secret Sharing for Two-Party Secure Thresholded Distance Evaluation, Cryptology ePrint Archive, Paper 2022/1688, 2022. L'acronyme 'FSS' fait référence au partage d'une fonction secrète (« Function Secret Sharing »). Dans une étape 310, le dispositif de déchiffrement 3 d'indice i envoie le résultat partiel $o_i$ au dispositif de contrôle 1.

Le traitement mis en œuvre par le dispositif de déchiffrement 3 d'indice i est terminé.

Comme indiqué précédemment, le traitement constitué par les étapes 302 à 310 est mis en œuvre d fois : une fois par dispositif de déchiffrement d'indice i. Ainsi, d résultats partiels $o_1$,..., $o_d$ sont générés.

Le d-uplet de résultats partiels $o_1$,..., $o_d$ a pour propriété de permettre le calcul d'un résultat de contrôle o indiquant si la donnée biométrique d'épreuve *x* correspond ou non à la donnée biométrique de référence $y_u$. En revanche, il n'est pas possible de calculer ce résultat de contrôle sur la base d'une sous-partie de ce d-uplet.

Dans une étape 112, le dispositif de contrôle 1 reçoit les *d* résultats partiels $o_1$,..., $o_d$ respectivement générés et envoyés par les d dispositifs de déchiffrement 3.

Dans une étape 114, le dispositif de contrôle 1 calcule le résultat de contrôle *o* à partir des *d* résultats partiels

$o_1,...,o_d$ reçus. Comme indiqué ci-dessus, le résultat de contrôle indique si la donnée biométrique d'épreuve $x$ correspond ou non à la donnée biométrique de référence $y_u$.

Dans un mode de réalisation, le résultat de contrôle o est obtenu en sommant les résultats partiels, comme suit :

$$o = \sum_{i=1}^{d} o_i$$

Les traitements cryptographiques réalisés conjointement par les $d$ dispositifs de déchiffrement 3 et l'étape de calcul du résultat de contrôle o représentent une comparaison entre un seuil et la distance entre la donnée biométrique d'épreuve $x$ et la donnée biométrique de référence $y_u$. Le seuil est défini dans la fonction *FSS. Setup*() utilisée pour la génération du masque primaire r, des clés de déchiffrement secondaire et des données de démasquage (le seuil est en quelque sorte encodé par ces données).

En pratique, le résultat de contrôle o peut être un booléen.

Si le résultat de contrôle o indique que la donnée biométrique d'épreuve $x$ correspond à la donnée biométrique de référence $y_u$, c'est-à-dire que la valeur du résultat de contrôle o est égale à 1 (ou '*True*'), alors il est considéré que l'individu auquel se rapporte la donnée biométrique d'épreuve $x$ a préalablement été enrôlée auprès du serveur 2. Dans ces conditions, le processeur 10 peut commander dans une étape 116 une ouverture du portique 18, afin de permettre à l'individu d'accéder à une zone sécurisée.

Si le résultat de contrôle indique que la donnée biométrique d'épreuve $x$ ne correspond pas à la donnée biométrique de référence $y_u$, c'est-à-dire que la valeur du résultat de contrôle o est égale à 0 (ou '*False*'), alors il est considéré que l'individu contrôlé n'est pas l'individu de référence auquel se rapporte la donnée biométrique de référence $y_u$.

## Mode de réalisations particuliers

Dans un mode de réalisation, il est choisi k=1. Ainsi, un seul serveur de stockage 2 est mis à contribution pour produire des portions du chiffré $c_{s+r}$ du score masqué.

Les équations discutées précédemment peuvent s'écrire plus simplement comme suit :

$$c_s = f\left(x, c_{y_u}\right) = \sum_{i=1}^{d} f_i(p_i, ref_i)$$

$$S_i(p_i, ref_i) = \left(T_{i,j}(p_i, ref_i) + \langle r \rangle_{i,j}\right) mod\ 2^n$$

$$c_{s+r} \approx \sum_{i=1}^{d} S_i(p_i, ref_i)$$

Ici, l'unique serveur de stockage 2 mis à contribution détermine à lui seul toutes les d portions $S_i(p_i, ref_i)$ permettant de retrouver le chiffré $c_{s+r}$ du score masqué.

Dans ces conditions, le serveur de stockage 2 peut directement calculer le chiffré $c_{s+r}$ par sommation des d portions $S_i(p_i, ref_i)$, puis transmettre ce chiffré à tous les dispositifs de déchiffrement 3, plutôt que de laisser chaque dispositif de déchiffrement 3 mettre en œuvre cette étape (étape 305 dans ce qui a été décrit précédemment). Ainsi, une opération de sommation qui était réalisée d fois à l'étape 305 est ici réalisée une seule fois par l'unique serveur de stockage 2 sollicité.

Dans un mode de réalisation, il est choisi $d = 2$ (possiblement en combinaison avec $k = 1$). Dans ce mode de réalisation, deux dispositifs de déchiffrement 3 sont impliqués. Deux données intermédiaires $\langle c_{\hat{s}b} \rangle_1$, $\langle c_{\hat{s}b} \rangle_2$ sont échangées entre les deux dispositifs de déchiffrement 3 d'indices respectifs 1 et 2.

## Optimisations de la table de correspondance $S_{i,j}$

Comme les calculs réalisés sont réduits modulo $2^n$, un terme $S_{i,j}(p_{i,j}, ref_{i,j})$ ne peut avoir qu'une valeur parmi $2^n$ possibles.

Dans un mode de réalisation avantageux, la table de correspondance $S_{i,j}$ comprend deux tables :

- une première table qui met en correspondance la paire $p_{i,j}, ref_{i,j}$ avec un pointeur,

- une deuxième table de $2^n$ termes, correspondant aux $2^n$ valeurs que peuvent prendre chaque terme $S_{i,j}(p_{i,j}, ref_{i,j})$.

Le pointeur fourni par la première table pointe vers une position de la deuxième table où la valeur du terme recherché $S_{i,j}(p_{i,j}, ref_{i,j})$ est stockée.

Ainsi, la détermination de ce terme se fait en deux temps : le serveur de stockage 2 commence par déterminer le pointeur mis en correspondance avec la paire d'entrée dans la première table, puis détermine le terme dans la deuxième table à l'aide du pointeur d'indice i.

Cette décomposition en deux tables a pour avantage de réduire drastiquement l'empreinte mémoire des tables de correspondance. Les pointeurs constituant les valeurs de sortie de la première table sont beaucoup plus compacts que les termes $S_{i,j}(p_{i,j}, ref_{i,j})$. Par exemple, un pointeur peut tout simplement prendre la forme d'un indice de position dans la deuxième table, donc avoir une valeur entière entre 0 et $2^n - 1$. Ainsi, la première table ne comprend que des valeurs de sortie compactes, et les termes $S_{i,j}(p_{i,j}, ref_{i,j})$, dont le nombre est limité ($2^n$), sont délocalisés dans la deuxième table, de longueur limitée.

Le serveur de stockage d'indice i peut ainsi utiliser les tables suivantes :

- $d$ premières tables qui mettent chacune en correspondance la paire $p_{i,j}, ref_{i,j}$ avec un pointeur,
- une deuxième table commune « pointée » par les d pointeurs qui précèdent.

**Permutation des tables de correspondance avant répétition du procédé**

Jusqu'ici, on a décrit un procédé d'identification se fondant sur une donnée biométrique d'épreuve $x$, pour contrôler l'identité d'un individu auquel se rapporte cette donnée $x$. Ce procédé a vocation à être répété pour plusieurs données biométriques d'épreuve différentes, susceptibles de se rapporter à des individus différents.

De préférence, au moins une des données suivantes est une donnée à usage unique pour la donnée biométrique d'épreuve $x$, voire pour le chiffré $c_{s+r}$ du score masqué :

- la donnée de démasquage d'indice i,
- la clé de déchiffrement secondaire d'indice i.

Ces mesures permettent de mieux protéger le système contre des attaques par rejeu.

Une autre mesure qui permet d'atteindre cet objectif de protection contre des attaques par rejeu moyennant des opérations très simples consiste à réaliser une permutation de la deuxième table discutée précédemment, avant d'appliquer les étapes du procédé à une nouvelle donnée biométrique d'épreuve $x$ à contrôler. En réalisant une telle permutation, les masques secondaires $\langle r \rangle_{i,j}$ sont « répartis » différemment.

**Autres modes de réalisation**

Dans ce qui précède, il a été discuté une application particulière du procédé de contrôle d'identité, dans laquelle le résultat du contrôle conditionne un accès à une zone sécurisé. Il est toutefois entendu que le procédé décrit peut être utilisé pour d'autres applications.

**Revendications**

1. Procédé comprenant des étapes de :

   - calcul d'un chiffré d'un score masqué, le score masqué représentant le résultat de l'application d'un masque primaire r à un score représentant une distance entre une donnée biométrique d'épreuve ($x$) se rapportant à un individu et une donnée biométrique de référence ($y_u$), le calcul comprenant :

     - pour tout j allant de 1 à k et pour tout i allant de 1 à d, avec $k \geq 1$ et $d \geq 2$, détermination dans une table de correspondance précalculée d'un terme égal à $(T_{i,j} + \langle r \rangle_{i,j}) \bmod 2^n$ en correspondance avec une paire constituée d'une portion de la donnée biométrique d'épreuve ($x$) et d'une portion d'un chiffré ($c_{y_u}$) de la donnée biométrique de référence, où :

       - le chiffré de la donnée biométrique de référence ($c_{y_u}$) résulte d'un chiffrement de la donnée biométrique de référence ($y_u$) à l'aide d'une clé de chiffrement primaire (pk),
       - n est un entier prédéfini,

- une somme $\left(\sum_{i=1}^{d} \sum_{j=1}^{k} T_{i,j}\right) mod\ 2^n$ des tables $T_{i,j}$ constitue une estimée d'un chiffré du score sous forme non masquée,
- le masque primaire $r$ est relié à des masques secondaires $\langle r \rangle_{i,j}$ par la relation suivante :

$$\left(\sum_{i=1}^{d} \sum_{j=1}^{k} \langle r \rangle_{i,j}\right) mod\ 2^n = r\ mod\ 2^n,$$

- mise en œuvre de la sommation suivante de sorte à obtenir le chiffré du score masqué :

$$\sum_{i=1}^{d} \sum_{j=1}^{k} \left(T_{i,j} + \langle r \rangle_{i,j}\right) mod\ 2^n;$$

- pour tout i allant de 1 à d, mise en œuvre des étapes suivantes par un dispositif de déchiffrement (3) d'indice i :

- déchiffrement du chiffré du score masqué à l'aide d'une clé de déchiffrement secondaire ($\langle sk \rangle_i$) d'indice i, le déchiffrement produisant une donnée ($\hat{s}$) représentant le score masqué modulo $2^n$,
- génération d'un résultat partiel ($o_i$) d'indice i à partir de la donnée ($\hat{s}$) et d'une donnée de démasquage ($k_i$) d'indice i,

dans lequel :

- les clés de déchiffrement secondaires ($\langle sk \rangle_1,..., \langle sk \rangle_d$) d'indices respectifs allant de 1 à d sont issues d'une clé de déchiffrement primaire (sk) associée à la clé de chiffrement (pk),
- les résultats partiels ($o_1,..., o_d$) d'indices respectifs allant de 1 à d permettent le calcul d'un résultat de contrôle ($o$) indiquant si la donnée biométrique d'épreuve ($x$) correspond ou non à la donnée biométrique de référence.

2. Procédé selon la revendication 1, dans lequel la détermination du terme $(T_{i,j} + \langle r \rangle_{i,j})\ mod\ 2^n$ comprend les étapes suivantes :

- détermination dans une première table de correspondance d'indice i d'un pointeur d'indice i en correspondance avec la paire, le pointeur d'indice i pointant vers une position, dans une deuxième table de $2^n$ termes, où le terme d'indice i est stocké,
- détermination du terme d'indice i dans la deuxième table à l'aide du pointeur d'indice i.

3. Procédé selon la revendication 2, comprenant en outre des étapes de :

- permutation de la deuxième table, puis
- répétition du calcul du chiffré du score masqué pour une nouvelle donnée biométrique d'épreuve.

4. Procédé selon l'une quelconque des revendications 1 à 3, dans lequel :

- $k > 1$,
- pour tout j allant de 1 à k et pour tout i allant de 1 à d, la détermination du terme égal à $(T_{i,j} + \langle r \rangle_{i,j})\ mod\ 2^n$ est mise en œuvre par un serveur de stockage (2) d'indice j,
- pour tout j allant de 1 à k, le serveur de stockage (2) d'indice j calcule une portion d'indice j du chiffré du score masqué par la sommation suivante : $\sum_{i=1}^{d}\left(T_{i,j} + \langle r \rangle_{i,j}\right) mod\ 2^n$,
- pour tout i allant de 1 à d, le dispositif de déchiffrement (3) d'indice i calcule le chiffré du score masqué par sommation des portions d'indices respectifs allant de 1 à k du chiffré du score masqué.

5. Procédé selon l'une quelconque des revendications 1 à 3, dans lequel $k = 1$ et le calcul du chiffré du score masqué est mis en œuvre par un unique serveur de stockage (2).

6. Procédé selon l'une quelconque des revendications 1 à 5, dans lequel le déchiffrement mis en en œuvre par le dispositif de déchiffrement (3) d'indice i comprend les étapes suivantes :

- calcul d'une donnée intermédiaire ($\langle c_{\hat{s}_b} \rangle_i$) d'indice i à partir des données suivantes :

- une première partie ($c_{s_b}$) du chiffré du score masqué,
- la clé de déchiffrement secondaire ($\langle sk \rangle_i$) d'indice i, et
- un aléa ($e_i$) généré par le dispositif de déchiffrement (3) d'indice i,

- pour tout dispositif de déchiffrement (3) d'indice j≠i, réception d'une donnée intermédiaire ($\langle c_{\hat{s}b} \rangle_j$) d'indice j envoyée par le dispositif de déchiffrement (3) d'indice j,
- calcul de la donnée ($\hat{s}$) représentant le score masqué à partir des données suivantes :

- les données intermédiaires ($\langle c_{\hat{s}b} \rangle_1$, ..., $\langle c_{\hat{s}b} \rangle_d$) d'indices respectifs allant de 1 à d,
- une deuxième partie ($c_{s_a}$) du chiffré du score masqué.

7. Procédé selon la revendication 6, dans lequel la donnée intermédiaire $\langle c_{\hat{s}b} \rangle_i$ d'indice i est calculée comme suit $\langle c_{\hat{s}b} \rangle_i = c_{s_b}\langle sk \rangle_i + e_i$, dans lequel

- $c_{s_b}$ est la première partie du chiffré ($c_s$) du score masqué,
- $\langle sk \rangle_i$ est la clé de déchiffrement secondaire d'indice i,
- $e_i$ est l'aléa généré par le dispositif d'indice i.

8. Procédé selon l'une quelconque des revendications 6 et 7, dans lequel la donnée ($\hat{s}$) représentant le score masqué modulo $2^n$ est calculée comme suit :

$$\hat{s} = \left[ \left\lfloor \frac{t}{q}\left[ c_{s_a} + \sum_{i=1}^{d} \langle c_{\hat{s}_b} \rangle_i \right]_q \right\rceil \right]_t \, mod \, 2^n$$

dans lequel

- $\langle c_{\hat{s}_b} \rangle_i$ est la donnée intermédiaire d'indice i,
- $c_{s_a}$ est la deuxième partie du chiffré ($c_s$) du score,
- $t$ et $q$ sont deux entiers constituant des paramètres d'un schéma de chiffrement de Brakerski/Fan-Vercauteren,
- $\lfloor . \rceil$ désigne l'opérateur d'arrondi à l'entier le plus proche,
- $[ . ]_q$ désigne l'opérateur modulo q,
- $[ . ]_t$ désigne l'opérateur modulo t.

9. Procédé selon l'une quelconque des revendications 1 à 8, dans lequel le résultat de contrôle ($o$) est égal à la somme des résultats partiels ($o_1$, ... , $o_d$) d'indices respectifs allant de 1 à d.

10. Procédé selon l'une quelconque des revendications 1 à 9, dans lequel au moins une des données suivantes est une donnée à usage unique pour la donnée biométrique d'épreuve (x), voire pour le chiffré du score masqué :

- la donnée de démasquage d'indice i,
- la clé de déchiffrement secondaire d'indice i.

11. Produit programme d'ordinateur comprenant des instructions de code de programme pour l'exécution des étapes du procédé selon l'une quelconque des revendications 1 à 10, lorsque ce programme est exécuté par un système.

12. Mémoire lisible par ordinateur stockant des instructions exécutables pour l'exécution des étapes du procédé selon l'une des revendications 1 à 10.

13. Système comprenant un dispositif de contrôle (1), un serveur de stockage (2), au moins deux dispositifs de déchiffrement (3), un serveur de confiance (4) et un dispositif d'enrôlement (6), dans lequel lesdits dispositifs (1,3,6) et serveurs (2,4) comportent des processeurs configurés pour mettre en œuvre les étapes du procédé selon l'une quelconque des revendications 1 à 10.

14. Procédé de contrôle d'accès d'un individu à une zone sécurisée, comprenant la mise en œuvre des étapes du procédé selon l'une quelconque des revendications 1 à 10 pour une identification de l'individu

[Fig. 1]

[Fig. 2]

[Fig. 3]

```
┌─────┐
│ 102 │
└─────┘
   │
   ▼
┌─────┐            ┌─────┐
│ 104 │──────────▶│ 202 │
└─────┘            └─────┘
   │                  │
   │                  ▼
   │               ┌─────┐
   │               │ 204 │
   │               └─────┘
   │                  │
   │                  ▼
   │               ┌─────┐      ┌─────┐
   │               │ 206 │─────▶│ 302 │
   │               └─────┘      └─────┘
   ▼                              │
┌─────┐                           │                              ┌─────┐
│ 106 │───────────────────────────┼─────────────────────────────▶│ 402 │
└─────┘                           │                              └─────┘
                                  │                                 │
                                  │                                 ▼
                                  │                              ┌─────┐
                                  │                              │ 404 │
                                  │                              └─────┘
                                  │                                 │
                                  │                                 ▼
                                  ▼                              ┌─────┐
                               ┌─────┐                          │ 406 │
                               │ 303 │                          └─────┘
                               └─────┘                             │
                                  │                                ▼
                                  ▼                              ┌─────┐
                               ┌─────┐                          │ 408 │
                               │ 304 │◀─────────────────────────└─────┘
                               └─────┘
                                  │
                                  ▼
                               ┌─────┐
                               │ 306 │
                               └─────┘
                                  │
                                  ▼
                               ┌─────┐
                               │ 308 │
                               └─────┘
                                  │
                                  ▼
┌─────┐                        ┌─────┐
│ 112 │◀───────────────────────│ 310 │
└─────┘                        └─────┘
   │
   ▼
┌─────┐
│ 114 │
└─────┘
   │
   ▼
┌─────┐
│ 116 │
└─────┘
```

Europäisches
Patentamt

European
Patent Office

Office européen
des brevets

# RAPPORT DE RECHERCHE EUROPEENNE

Numéro de la demande

EP 25 16 9944

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y,D | BASSIT AMINA ET AL: "Multiplication-Free Biometric Recognition for Faster Processing under Encryption", 2022 IEEE INTERNATIONAL JOINT CONFERENCE ON BIOMETRICS (IJCB), IEEE, 10 octobre 2022 (2022-10-10), pages 1-9, XP034274520, DOI: 10.1109/IJCB54206.2022.10007958 * sections 3 et 4, introduction de la secton 5; figure 2 * | 1-14 | INV. H04L9/00 H04L9/32 |
| Y,D | Ibarrondo Alberto ET AL: "Funshade: Functional Secret Sharing for Two-Party Secure Thresholded Distance Evaluation", eprint IACR, 5 décembre 2022 (2022-12-05), pages 1-12, XP093111440, Extrait de l'Internet: URL:https://eprint.iacr.org/2022/1688.pdf [extrait le 2023-12-12] * protocoles 3 à 6 * | 1-14 | |
| A | BASSIT AMINA ET AL: "Fast and Accurate Likelihood Ratio-Based Biometric Verification Secure Against Malicious Adversaries", IEEE TRANSACTIONS ON INFORMATION FORENSICS AND SECURITY, IEEE, USA, vol. 16, 26 octobre 2021 (2021-10-26), pages 5045-5060, XP011886636, ISSN: 1556-6013, DOI: 10.1109/TIFS.2021.3122823 [extrait le 2021-11-04] * sections IV et V * | 1-14 | DOMAINES TECHNIQUES RECHERCHES (IPC) H04L |

-/--

Le présent rapport a été établi pour toutes les revendications

| Lieu de la recherche | Date d'achèvement de la recherche | Examinateur |
|---|---|---|
| Munich | 17 septembre 2025 | Manet, Pascal |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P04C02)

page 1 de 2

Europäisches
Patentamt

European
Patent Office

Office européen
des brevets

## RAPPORT DE RECHERCHE EUROPEENNE

Numéro de la demande

EP 25 16 9944

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | IBARRONDO ALBERTO ET AL: "Colmade: Collaborative Masking in Auditable Decryption for BFV-based Homomorphic Encryption", PROCEEDINGS OF THE 2022 ACM WORKSHOP ON INFORMATION HIDING AND MULTIMEDIA SECURITY, IEEE PRESSPUB767, PISCATAWAY, NJ, USA, 23 juin 2022 (2022-06-23), pages 129-139, XP059074593, DOI: 10.1145/3531536.3532952 * le document en entier * ----- | 1-14 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 17 septembre 2025 | Manet, Pascal |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 2 de 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **IBARRONDO, ALBERTO et al.** Colmade: Collaborative masking in auditable decryption for bfv-based homomorphic encryption.. *Proceedings of the 2022 ACM Workshop on Information Hiding and Multimedia Security*, 2022
- Multiplication-free biometric recognition for faster processing under encryption.. **BASSIT, AMINA et al.** 2022 IEEE International Joint Conference on Biometrics (IJCB). IEEE, 2022
- **IBARRONDO et al.** Funshade : Functional Secret Sharing for Two-Party Secure Thresholded Distance Evaluation. *Cryptology*, 2022
- **FAN, JUNFENG** ; **FREDERIK VERCAUTEREN**. Somewhat practical fully homomorphic encryption.. *Cryptology*, 2012